# EUROPÄISCHE PATENTSCHRIFT

(11) **EP 0 593 063 B1**
(45) Veröffentlichungstag und Bekanntmachung des Hinweises auf die Patenterteilung: **19.02.1997**
(21) Anmeldenummer: 93116658.1
(22) Anmeldetag: 14.10.1993
(51) Int. Cl.: F16P 3/16, F16P 3/24, E01C 19/28

(54) **Steuereinrichtung für eine handgeführte Arbeitsmaschine mit Fahrantrieb**
Control mechanism for self-propelled hand-guided machine
Système de commande pour une machine automobile guidé à la main

(30) Priorität: 14.10.1992 DE 4334657
(43) Veröffentlichungstag der Anmeldung: 20.04.1994
(73) Patentinhaber: MEFLEX TELECONTROL GMBH & CO., D-35630 Ehringshausen (DE)
(72) Erfinder: Abendroth, Bernd, D-35641 Schöffengrund (DE); Altenheiner, Klaus, D-35630 Ehringshausen-Katzenfurt (DE); Küster, Klaus, D-35630 Ehringshausen (DE); Reinhardt, Günter, D-35614 Asslar-Werdorf (DE); Weier, Johann, D-35794 Winkels (DE)
(74) Vertreter: Müller, Eckhard, Dr.

(56) Entgegenhaltungen:
- EP-A- 0 398 393
- DE-A- 4 026 012
- DE-C- 4 126 488
- GB-A- 2 154 190

## Beschreibung

Die Erfindung bezieht sich auf eine Steuereinrichtung für eine handgeführte Arbeitsmaschine mit Fahrantrieb, wie bspw. eine Vibrationswalze, mit einer Notabschalteinrichtung zur Stillsetzung des Fahrantriebes der Arbeitsmaschine im Gefahrenfalle, wobei die Notabschalteinrichtung einen an der Bedienerseite der Arbeitsmaschine vorstehenden und auf die Maschine hin verschiebbaren, vorzugsweise federbelasteten Taster aufweist und Steuerhebel zum Ingangsetzen bzw. Schalten der Fahrtrichtung des Fahrantriebes vorgesehen ist.

Handgeführte, also bspw. zu Fuß vom Bediener geführte Vibrationswalzen, welche zum Verdichten von Schüttgut im Straßenbau eingesetzt werden, besitzen üblicherweise eine Deichsel mit an ihrem Ende angeordnetem Bügel zum Führen der Maschine von Hand und einem von der Bedienerperson von Hand gegen den Bügel schwenkbaren Zugbügel. Durch Anziehen des Zugbügels bzw. Herunterziehen des Zugbügels wird eine Steuereinrichtung zur Inbetriebnahme der Antriebseinheit der Arbeitsmaschine für eine Vorwärts- und Rückwärtsfahrt betätigt. Ein Steuerhebel für das Auswählen der Fahrtrichtung bzw. Stillsetzen ist mit dem Steuergerät über eine lösbare Kupplung verbunden. Bei einer Abschaltung des Fahrantriebes durch Loslassen des Zugbügels trennt dieser meist federbelastete Zugbügel die Kupplung und der Fahrantrieb wird ausgeschaltet.

Eine Steuereinrichtung mit den eingangs genannten Merkmalen ist bereits aus der GB-A-2 154 190 bekannt. Allerdings ist bei dieser bekannten Vorrichtung nicht vorgesehen, daß die Notabschalteinrichtung im Gefahrenfalle den Fahrantrieb für eine vorübergehende Umkehr der Fahrtrichtung schaltet. Es hat sich aber gezeigt, daß lediglich ein Abschalten des Fahrantriebes der Arbeitsmaschine nicht immer ausreichend ist, um ein Einklemmen der Bedienerperson zu verhindern.

Weiterhin ist eine Steuereinrichtung aus der EP-A-0 398 393 bekannt, bei der mittels einer elektronischen Steuereinrichtung und eines elektronischen Sensors im Gefahrenfalle der Fahrantrieb für eine vorübergehende Umkehr der Fahrtrichtung geschaltet wird. Allerdings lassen sich bei diesen weitgehend elektronisch ausgelegten Steuereinrichtungen Funktionsstörungen im Sicherheitssystem nicht immer vermeiden.

Aus der EP-B-053 215 ist eine weitere Steuereinrichtung bekannt mit einem Steuerhebel, der mit einem Zahnrad durch eine Kupplung verbunden ist. Das Zahnrad steht mit einer Zahnstange in getrieblicher Verbindung. Die Stellung der Zahnstange steuert den Antrieb der Arbeitsmaschine. Die Kupplung zwischen Steuerhebel und Zahnrad bzw. Zahnstange wird von dem Zugbügel aus- und eingekuppelt. Bei betätigtem Zugbügel sind der Steuerhebel und das Zahnrad in der Steuereinrichtung verbunden. Bei losgelassenem Zugbügel trennt die Kupplung den Steuerhebel vom Zahnrad, und aufgrund der automatischen Rückstellung der Zahnstange bei getrennter Kupplung bleibt die Arbeitsmaschine stehen. Das Loslassen des Zugbügels hat eine Nothalte-Funktion für den Fall, daß die Bedienerperson stolpert oder die Arbeitsmaschine einfach verläßt.

Die bekannte Steuereinrichtung hat den Nachteil, daß bei einer Rückwärtsfahrt der Bediener zwischen der Maschine und einem übersehenen Hindernis eingeklemmt werden kann. Diesem Umstand kommt insbesondere deshalb Bedeutung zu, weil beim Rückwärtsgang die Beobachtung in Fahrtrichtung behindert ist. Bei einem übersehenen Hindernis kann es auch vorkommen, daß die Bedienerperson zwischen dem Hindernis und der Arbeitsmaschine eingeklemmt wird, weil sie den Zugbügel, wenn überhaupt, nicht rechtzeitig losgelassen hat, und die Maschine noch einen gewissen Nachlauf hat, bis sie zum Stillstand kommt.

Demgegenüber liegt der Erfindung die Aufgabe zugrunde, bei einer Steuereinrichtung mit den eingangs genannten Merkmalen dieses Nachlaufproblem zu lösen und Funktionsstörungen im Sicherheitssystem weitestgehend zu vermeiden.

Diese Aufgabe wird nach der Erfindung i. w. dadurch gelöst, daß die Notabschalteinrichtung dazu ausgebildet ist, im Gefahrenfalle den Fahrantrieb für eine vorübergehende Umkehr der Fahrtrichtung zu schalten, wobei der Taster bei Betätigung zunächst den Steuerhebel für den Fahrantrieb der Arbeitsmaschine funktional vom Antriebsmotor trennt und bei weiterem Eindrücken die Umkehr des Fahrantriebes schaltet, und daß eine Rückstelleinrichtung vorgesehen ist, welche die Steuereinrichtung in Ruhestellung zurückführt.

Die Erfindung beinhaltet eine automatische Befreiung der Bedienerperson im Gefahrenfalle. In der Vergangenheit war das Abschalten des Fahrantriebes der Arbeitsmaschine nicht immer ausreichend, um ein Einklemmen der Bedienerperson zu verhindern, weil der Vorlauf des Tasters beim Abschalten zu kurz, das Gelände abschüssig war oder die Maschine eine zu hohe Geschwindigkeit besaß. Hier schafft die Erfindung Abhilfe. Damit in der Gefahrensituation mit der eingeklemmten Bedienerperson durch Reversierung des Antriebs nicht eine Verselbstständigung der Arbeitsmaschine erfolgen kann, wird der reversierte Fahrantrieb automatisch wieder abgeschaltet, sobald das Signal für die Notabschaltung erloschen und die eingeklemmte Person befreit ist. Grundsätzlich kann bspw. bei einer Vibrationswalze auch ein evtl. vorhandener Rüttelantrieb o. dgl. abgeschaltet werden, sobald der Fahrantrieb ausgeschaltet wird. Funktionsstörungen im Sicherheitssystem der Steuereinrichtung mit Notabschaltung werden dadurch vermieden, daß der eingedrückte Taster einen Steuerhebel für den Fahrantrieb funktional vom Motor der Arbeitsmaschine trennt und eine Rückstelleinrichtung vorgesehen ist, die ohne zusätzlichen Eingriff der Bedienerperson den Fahrantrieb in Ruhestellung bringt. Erst wenn der Taster noch weiter eingedrückt wird, erfolgt nach Stillsetzung des Fahrantriebes der Maschine die Umkehr der Fahrtrichtung. Sobald die Maschine soweit zurückbewegt ist, daß der Taster durch nachlassenden Körperkontakt wieder freigegeben ist, schaltet der Fahrantrieb durch die automatische Rückstelleinrichtung wieder in die Ruhestellung zurück. Die Bedienerperson ist dann nicht mehr eingeklemmt. Für die automatische Rückstellung des Tasters ist dieser vorzugsweise federbelastet, so daß er nach einer gewissen Wegstrecke der Maschine in Vorwärtsrichtung, freigegeben ist.

In bevorzugter Weiterbildung der Erfindung ist vorgesehen, daß der Taster den Steuerhebel für den Fahrantrieb zwangsweise funktional vom Motor trennt. In erster Linie ist an eine mechanische Lösung gedacht, wobei die Kraft, mit der der Taster eingeschoben wird, ggf. verstärkt wird und auf die Trennung von Steuerhebel des Fahrantriebes und Steuereinrichtung wirkt. Selbst wenn die Bedienerperson fehlsam einen für die Aktivierung des Fahrantriebes vorgesehenen Zugbügel beim Auffahrunfall umklammern oder gar den Zugbügel an dem zur Führung der Maschine vorgesehenen Bügel festbinden sollte, wie dies mitunter zu beobachten ist, wird durch den Taster zwangsweise die am Steuerhebel eingestellte Fahrtrichtung durch Zwangskopplung des Steuerhebels aufgehoben. Nach dieser Abkopplung kann die automatische Rückführung der Steuereinrichtung den Stillstand der Maschine bewirken, woran sich unmittelbar die Vorwärtsbewegung der Maschine anschließt. Ggf. kann durch eine geeignete Übersetzung der Tasterkraft die Trennung des Steuerhebels vom Fahrantrieb sichergestellt werden. Die Ausgestaltung der Erfindung geht dabei von der derzeit üblichen Ausführung bspw. bei Vibrationswalzen oder artverwandten Maschinen aus, die mechanisch von Hand eine Voreinstellung des Fahrantriebes vorsehen. Ebenso können aber auch elektrische Steuerelemente, wie elektrische Schalter, Sensoren etc., an die Stelle des Steuerhebels oder auch des Tasters treten.

In bevorzugter Ausgestaltung der Erfindung ist es vorgesehen, daß eine mechanisch-flexible Fernbetätigung den Zugbügel und die Steuereinrichtungen verbindet. Damit wird die Ankopplung der Bedienelemente an die Steuereinrichtungen unabhängig von der konstruktiven Ausgestaltung der Deichsel, des Bügels zum Führen der Arbeitsmaschine und der Steuereinrichtung. Länge und Verlegung der Fernbetätigungen können in einfacher Weise am Montageort angepaßt werden.

Nach einer Ausgestaltung der Erfindung ist es vorgesehen, daß bei Einschieben des Tasters der Zugbügel zwangsweise in seine den Fahrantrieb abschaltende Stellung übergeführt wird. Dies kann in konstruktiver Hinsicht bspw. dadurch realisiert werden, daß eine sich in Richtung der Deichsel erstreckende Steuerstange des Tasters bei seinem Eindrücken auf einer mit dem Zugbügel verbundene schiefen Ebene gleitet, wodurch der Zugbügel nach unten in seine Ruhestellung übergeführt wird. Selbstverständlich ist es, wie oben angegeben, nach der Erfindung aber auch möglich, daß die Betätigung des Tasters mit Stillsetzen des Fahrantriebes und einer anschließenden Reversierung unabhängig von der Stellung des an der Deichsel der Maschine angeordneten Zugbügels erfolgt.

Die Präzision der Stellbewegung bei der Fernbetätigung wird erfindungsgemäß noch dadurch verbessert, daß ein zweiarmiger Hebel vorgesehen wird, dessen einen Arm der Zugbügel bildet, an dem die Bedienerperson angreift und schaltet und an dessen anderem Hebelarm die mechanisch-flexiblen Fernbetätigungen angreifen.

Eine weitere Ausgestaltung der Erfindung zeichnet sich dadurch aus, daß die Steuereinrichtung zwei Eingänge aufweist, wobei der Steuerhebel mittels einer Kupplung mit dem ersten Eingang der Steuereinrichtung verbunden ist und der eingedrückte bzw. eingeschobene Taster am zweiten Eingang der Steuereinrichtung angreift. Damit wird ein konstruktiver Weg aufgezeigt, der es erlaubt, sowohl die normale Steuerung des Fahrbetriebes der Arbeitsmaschine am Steuerhebel von Hand vorzunehmen, als auch die Notabschaltung und die Umkehr der Fahrtrichtung zu schalten, auch wenn der Bediener nicht in der Lage ist, in einer Unfallsituation den Steuerhebel zu betätigen.

Ein weiteres vorteilhaftes, die Erfindung ergänzendes Merkmal ist darin zu sehen, daß die Kupplung als Drehkupplung ausgebildet ist, wobei die Kupplungsteile stirnseitig formschlüssig ineinander greifen und axial entriegelbar sind. Dabei liegt das Schwergewicht auf der stirnseitigen formschlüssigen Kupplung einer mit dem Steuerhebel der Steuereinrichtung zu kuppelnden Welle einerseits und einem anzukuppelnden Zahnrad in der Steuereinrichtung andererseits. Vorteilhaft soll diese formschlüssige Kupplung durch einen quer durch die Welle am Steuerhebel gesteckten Stift und eine im Zahnrad vorgesehene nutenförmige Ausnehmung realisiert werden, wobei sich diese Lösung durch ihre bauliche Einfachheit auszeichnet.

Bei dieser Ausgestaltung des Tasters ist bevorzugt daran gedacht, daß der eingedrückte Taster die Kupplungsteile mechanisch trennt. Gerade im rauhen Betrieb auf Baustellen ist es wichtig, daß Sicherheitseinrichtungen einfach zu überschauen und ggf. instandzuhalten sind. Die vorgeschlagene Ausgestaltung trägt hierzu bei und erlaubt eine visuelle Funktionskontrolle, ohne daß es irgendwelcher Hilfsmittel bedarf.

Zur Vermeidung von Verletzungen durch den Taster ist dieser als Pralltopf ausgebildet. Der Pralltopf hat eine große Berührungsfläche, die gepolstert ist und eine Verletzung weitestgehend ausschließt.

Weiterhin bezieht sich die Erfindung auf eine Arbeitsmaschine mit einer Steuereinrichtung oder auf eine Deichsel für eine solche Arbeitsmaschine in einer der vorbeschriebenen Ausgestaltungen.

Weitere Ziele, Vorteile, Merkmale und Anwendungsmöglichkeiten der vorliegenden Erfindung ergeben sich aus der nachfolgenden Beschreibung zweier Ausführungsbeispiele anhand der Zeichnungen.

Es zeigen:
- Figur 1: eine Deichsel einer handgeführten, maschinell angetriebenen Baumaschine in perspektivischer Unteransicht mit einer Steuereinrichtung für den Fahrantrieb in der Steuerstellung "Null" (Ruhestellung),
- Figur 2: die Ansicht nach Figur 1 in Rückwärts-Fahrstellung,
- Figur 3: eine Ansicht der Deichsel ähnlich Figur 1 und Figur 2 in Nothalt-Stellung,
- Figur 4: die Deichsel mit Steuereinrichtung in Reversierstellung des Fahrantriebes,
- Figur 5: eine mögliche Ausführungsform der Steuereinrichtung mit eingekuppeltem Steuerhebel,
- Figur 6: eine mögliche Ausführungsform der Steuereinrichtung mit ausgekuppeltem Steuerhebel und
- Figur 7: eine weitere Ausführungsform einer Steuereinrichtung in einer Darstellung gemäß Figur 1.

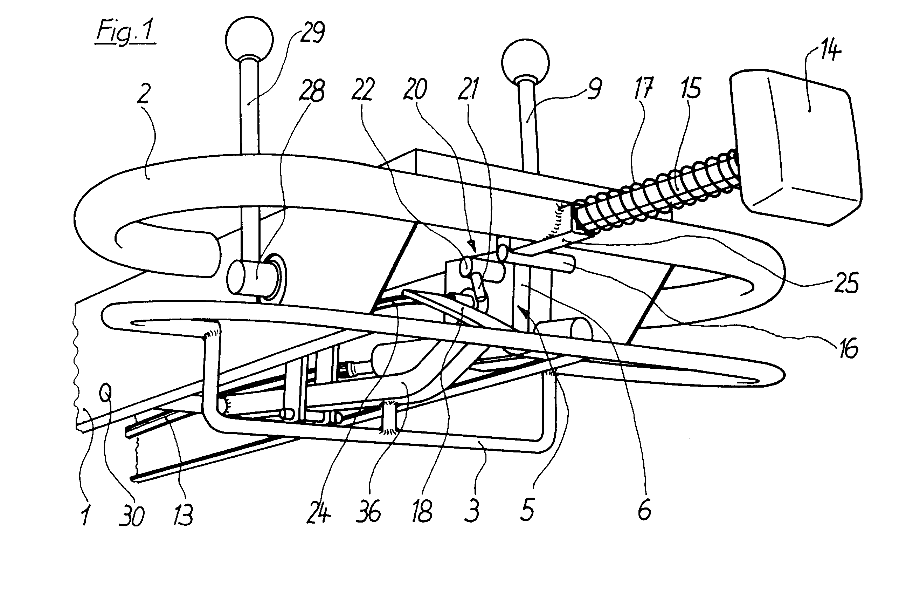

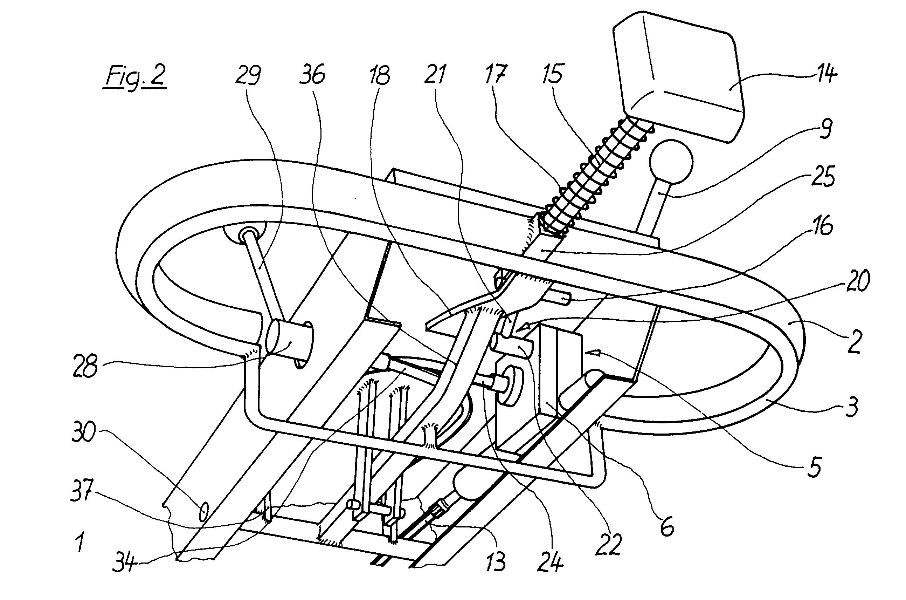

Die Deichsel 1 gemäß Figuren 1 bis 4 ist für eine handgeführte, mit motorischem Antrieb versehene Baumaschine, insbesondere eine Vibrationswalze bestimmt. An der Deichsel 1 ist eine Notabschalteinrichtung angeordnet. Zu der Notschalteinrichtung gehört eine Steuereinrichtung 5, ein Bügel 3, Fernbetätigungen 24, 34 sowie ein Taster 14 mit den zugehörigen kinematischen Wirkverbindungen. Die Steuerung der Maschine erfolgt im Normalbetrieb über Steuerhebel 9, 29 und den Zugbügel 3 von Hand. Der Zugbügel 3 ist federbelastet und geht automatisch in seine in Gebrauchsstellung untere Position zurück, in der sich die Maschine in Ruhestellung befindet. Der Zugbügel 3 stellt somit eine Abschalteinrichtung dar. Geführt wird die Maschine an einem an der Deichsel 1 befestigten Bügel 2.

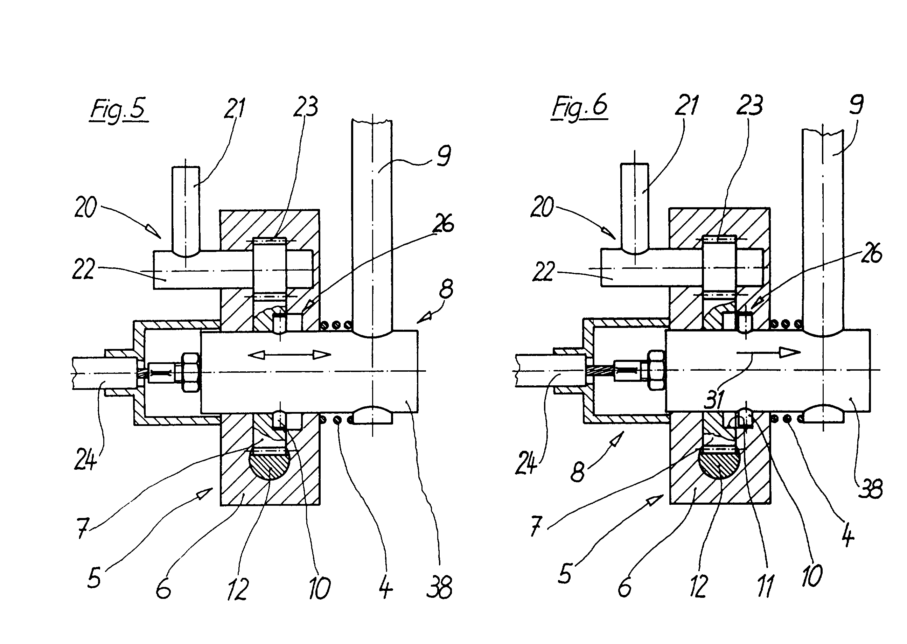

Der Zugbügel 3 ist mit einem Gelenk 30 in einem in Fahrtrichtung vorderen Bereich der Deichsel 1 angelenkt. Der Zugbügel 3 ist an einem zweiarmigen Hebel 35 ausgebildet, dessen einer Arm 36 den Zugbügel 3 trägt und dessen anderer Hebelarm 37 über die mechanisch-flexiblen Fernbetätigungen 24, 34 an die Steuereinrichtungen 5 angeschlossen ist. Mit den Fernbetätigungen 24, 34 wird, wie aus Figur 5 und Figur 6 für die Fernbetätigung ersichtlich, eine Welle 38 axial verschoben.

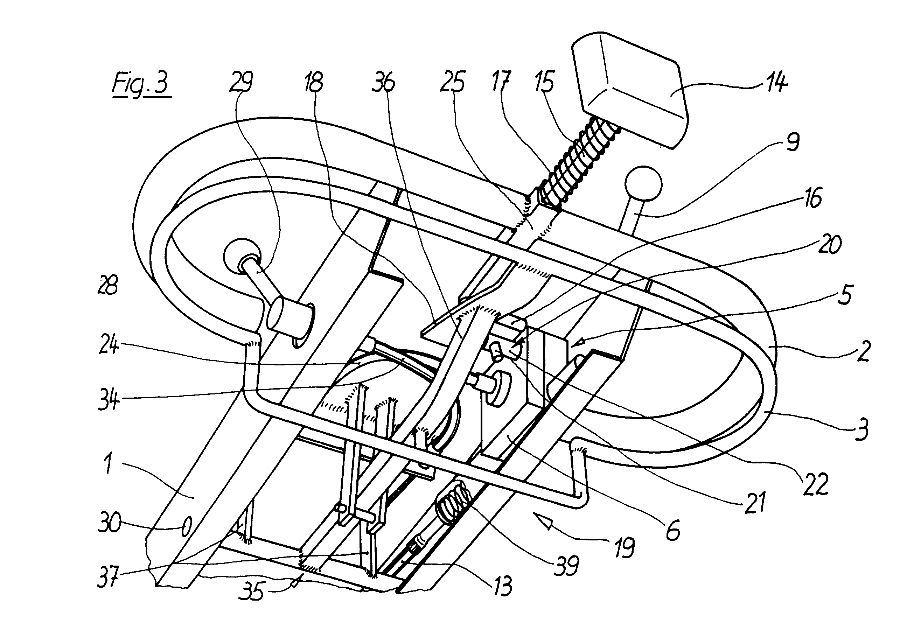

Am Zugbügel 3 ist eine schiefe Ebene 18 vorgesehen, die so angeordnet ist, daß sie bei angehobenem Zugbügel 3 mit dem Taster 14 zusammenwirkt. Die Einstellungen für die Arbeitsmaschine werden über Fernbetätigungen 13 innerhalb der Deichsel 11 an deren Motor weitergeleitet. Ohne eine Einstellung durch die Steuerhebel 9, 29 sorgt eine Rückstelleinrichtung 19 über eine Feder 39, wie aus Figur 3 ersichtlich, für die Ruhestellung des Antriebs der Arbeitsmaschine. Für den Fahrantrieb bedeutet dies Ruhestellung, die Arbeitsmaschine ist gebremst.

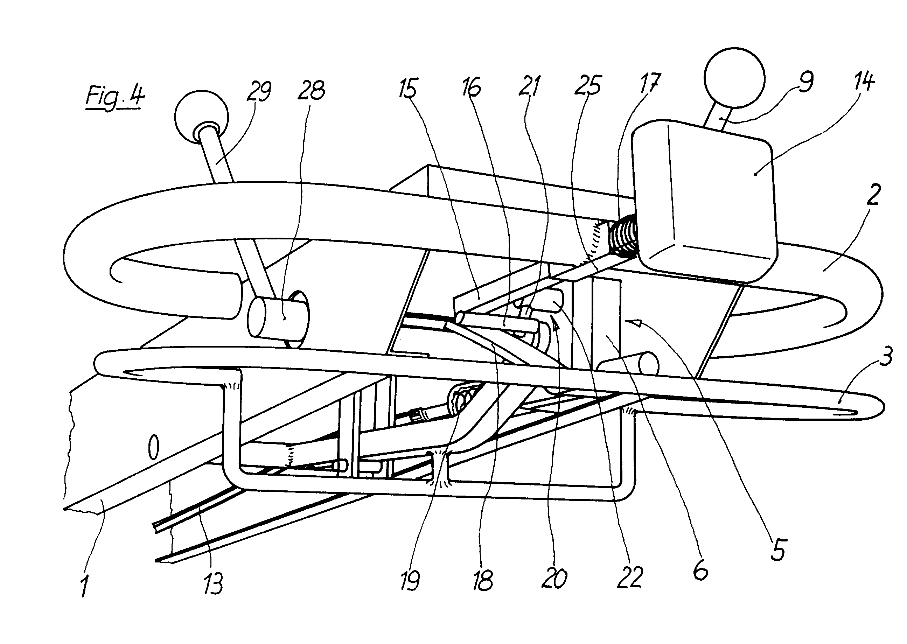

Der gegenüber dem Bügel 2 vorstehende Taster 14 ist stirnseitig an der Deichsel 1 und in einer Führung 25 mittig im Bügel 2 aufgenommen. Er ist mit seiner Steuerstange 15 in der Führung 25 gehalten und stützt sich über eine Feder 17 am Bügel 2 ab. Diese Feder 17 drückt den nicht beaufschlagten Taster 14 in seine vorderste Stellung. Der Taster 14 hat einen sehr breit ausgebildeten Kopf, damit er im Unglücksfall den Bediener nicht aufspießt, sondern großflächig abstützt. Der Taster 14 hat die Form eines Pralltopfes. An dem sich in den Bereich der Deichsel 1 erstreckenden Ende 32 der Steuerstange 15 des Tasters 14 ist ein Querbolzen 16 vorgesehen, der, wie aus Figur 4 ersichtlich, bei Betätigung des Tasters 14 in den Bereich der Steuereinrichtung 5 ragt. Es sind zwei gleichartige Steuereinrichtungen 5 jeweils für die Steuerhebel 9, 29 vorgesehen, deren Gehäuse 6 an der Deichsel 1 befestigt sind. Die in den Figuren sichtbare Steuereinrichtung 5 dient der Steuerung des Fahrantriebes. Die gegenüberliegende, an der Fernbetätigung 34 angeschlossene Steuereinrichtung, die in den Figuren nicht erkennbar ist, dient bspw. im Falle einer Vibrationswalze der Einstellung des Vibrationsantriebes.

Die Steuereinrichtungen werden am Beispiel der in den Figuren 5 und 6 dargestellten Steuereinrichtung 5 nachstehend erläutert.

Die Steuereinrichtung 5 hat zwei Eingänge 8, 20. Der Eingang 20 wird von dem Stellglied mit einer in das Gehäuse 6 ragenden Welle 22 gebildet, an der ein abkragender Arm 21 vorgesehen ist. Die Welle 22 ist im Gehäuse 6 drehbar gelagert und trägt ein Zahnritzel 23, das mit einem Zahnrad 7 im Gehäuse 6 der Steuereinrichtung 5 kämmt. Das Zahnrad 7 ist über eine lösbare Kupplung 26 mit dem als Welle ausgebildeten Eingang 8 und dem darin quer eingesteckten Steuerhebel 9 verbunden. Den anderen Eingang bildet der Steuerhebel 9 mit der Welle 38, auf der das Zahnrad 7 drehbar gelagert ist. Die Arretierung der Steuerhebel 9, 29 erfolgt in nicht gezeigter Weise reibschlüssig durch Einklemmen der Welle 38 im Gehäuse 6. Diese Reibkraft ist größer als die Rückstellkraft der Feder 39. Die Feder 13 wird nur wirksam bei Trennung der Kupplung 26. Die Steuerhebel 9, 29 sind gegen diese Kraft von Hand verstellbar.

Das Ergebnis jeden Steuervorgangs ist eine Verschiebung der Zahnstange 12 im Gehäuse 6 der Steuereinrichtung 5 in zur Zeichenebene orthogonaler Richtung. Die Zahnstange 12 wird immer durch das Zahnrad 7 bewegt. Das Zahnrad 7 kann alternativ von dem Steuerhebel 9 über die Kupplung 26 oder vom Arm 21 betätigt werden. Der Arm 21 nimmt an jeder Bewegung der Zahnstange 12 teil, während der Steuerhebel 9 nur im eingekuppelten Zustand an die Steuerbewegungen angeschlossen ist. Die Kupplung zwischen der Welle 38 und dem Zahnrad 7 besteht aus einer stirnseitigen Ausnehmung 11 im Zahnrad 7 und aus einem quer gestellten Stift 10, der die Welle 38 durchdringt, an beiden Seiten aus ihr herausragt und in die nuntenförmige Ausnehmung 11 im Zahnrad 7 hinein paßt. Durch axiale Verschiebung der Welle 38 wird der Stift 10 zwischen den in den Figuren 5 und 6 gezeigten Stellungen hin- und herbewegt. Diese Bewegung erfolgt durch Betätigung des Zugbügels 3. Im unbelasteten Zustand, d. h. bei losgelassenem Zugbügel 3, ist der Stift 10 außer Eingriff, wie in Figur 6 dargestellt. Das Ausrasten des Stiftes 10 aus der Ausnehmung 11 wird durch eine Feder 4, welche die Welle 38 in Richtung des Pfeiles 31 zieht, sichergestellt. Beim regulären Arbeitsbetrieb der Maschine wird diese ausschließlich durch die Steuerhebel 9, 29 auf die gewünschte Arbeitsweise eingestellt.

Sobald der Bediener die Maschine rückwärts fährt und dabei versehentlich auf ein Hindernis, z. B. eine Wand oder ein Fahrzeug, stößt, wird die Maschine ihn an die Wand drücken, wenn er nicht rechtzeitig den Zugbügel 3 losläßt. Im Falle, daß der Bediener an die Wand gedrückt wird, drückt er mit seiner Brust zunächst den Taster 14 ein. Der Taster 14 drückt zwangsläufig den Zugbügel 3 mit seiner den Bügel 2 druchgreifenden Steuerstange 15 über die schiefe Ebene 18 nach unten und stellt somit sicher, daß die Kupplung 26 getrennt wird. Damit erfolgt automatisch die Rückführung der Schaltstellung in die Ruhestellung durch die Feder 39, wie insbesondere aus Figur 3 ersichtlich. In dieser Phase ist der Arm 21, wie in Figur 1 gezeigt, in den Wirkungsbereich des Querbolzens 16 geschwenkt. Steht die Maschine aufgrund ihrer Eigendynamik oder aufgrund von Bodengefälle noch nicht still, und wird der Taster 14 weiter eingedrückt, d.h. der Bediener stärker an die Wand gedrückt, so trifft in dieser Endphase des Hubes des Tasters 14 der Querbolzen 16 entsprechend Figur 4 auf den Arm 21 und schaltet damit eine Richtungsumkehr der Maschine ein. Sobald die Fahrtrichtung der Arbeitsmaschine umgekehrt ist und die Maschine sich soweit vom Bediener bzw. der Wand, gegen die der Bediener gedrückt wurde, entfernt hat, daß der Taster wieder frei wird, geht die Steuereinrichtung aufgrund ihrer automatischen Rückstellung wieder in Nullstellung. Hierdurch ist in jedem Fall vermieden, daß der Bediener eingeklemmt wird.

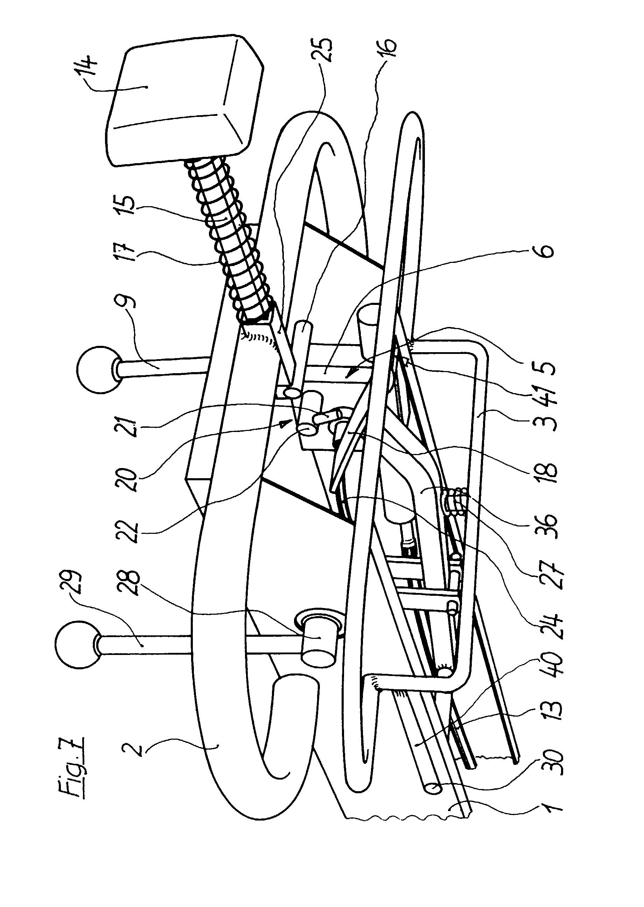

Bei der Ausführungsform gemäß Figur 7 ist es auch möglich, den Taster 14 zum Stillsetzen und anschließenden Reversieren des Fahrantriebes zu aktivieren, unabhängig davon, ob sich der Zugbügel 3 in einer unteren Null-Stellung oder in der an den Bügel 2 angezogenen Fahr-Stellung befindet. In Figur 7 sind die der Ausführungsform gemäß Figuren 1 bis 5 entsprechenden Funktionsteile mit identischen Bezugszeichen versehen, so daß insoweit auf eine Beschreibung im einzelnen verzichtet werden kann. Der Unterschied der Ausgestaltung gemäß Figur 7 gegenüber der Vorbeschriebenen besteht darin, daß zwischen dem Zugbügel 3 und dem Hebelarm 36 der schiefen Ebene 18 eine kraftschlüssige Verbindung in Form einer Druckfeder 27 vorgesehen ist. Die Feder 27 ist erforderlich, um für die Einschaltung des üblichen Fahrbetriebes die Kupplung 26 gegen die Kraft der Feder 4 einrücken zu können. Weiterhin ist die Verbindung zwischen der schiefen Ebene 18 und dem Zugbügel 3 bei Position 41 aufgehoben, wobei der Zugbügel 3 bei dem hier gewählten Ausführungsbeispiel mittels eines Schenkels 40 an dem Gelenk 30 der Deichsel 1 angelenkt ist. Wenn nun bei gegen den Bügel 2 angezogenem Zugbügel 3 die Notabschaltung durch Betätigen des Tasters 14 aktiviert wird, gelangt die Steuerstange 15 in Eingriff mit dem Arm 21 der Steuereinrichtung 5, wodurch die Kupplung 26 zum Stillsetzen und ggf. anschließendem Reversieren des Antriebes betätigt wird. Dabei wird die Druckfeder 27 durch die Bewegung des Hebelarmes 36 komprimiert. Voraussetzung für die Betätigung der Kupplung 26 ist, daß die Federkraft der Druckfeder 27 kleiner als die Federkraft der Feder 4 der Steuereinrichtung 5 ist.

### Bezugszeichenliste

- 1: Deichsel
- 2 -: Bügel
- 3 -: Zugbügel
- 4 -: Feder
- 5 -: Steuereinrichtung
- 6 -: Gehäuse
- 7 -: Zahnrad
- 8 -: Eingang
- 9 -: Handhebel
- 10 -: Stift
- 11 -: Ausnehmung
- 12 -: Zahnstange
- 13 -: Fernbetätigung
- 14 -: Taster
- 15 -: Steuerstange
- 16 -: Querbolzen
- 17 -: Feder
- 18 -: schiefe Ebene
- 19 -: Rückstelleinrichtung
- 20 -: Eingang
- 21 -: Arm
- 22 -: Welle
- 23 -: Ritzel
- 24 -: Schaltzug
- 25 -: Führung
- 26 -: Kupplung
- 27 -: Feder
- 28 -: Welle
- 29 -: Handhebel
- 30 -: Gelenk
- 31 -: Pfeil
- 32 -: Ende
- 33 -: Zugbügel
- 34 -: Schaltzug
- 35 -: Hebel
- 36 -: Hebelarm
- 37 -: Hebelarm
- 38 -: Welle
- 39 -: Feder
- 40 -: Schaukel
- 41 -: Position

## Patentansprüche

1. Steuereinrichtung für eine handgeführte Arbeitsmaschine mit Fahrantrieb, wie bspw. eine Vibrationswalze, mit einer Notabschalteinrichtung zum Stillsetzen des Fahrantriebes der Arbeitsmaschine im Gefahrenfalle, wobei die Notabschalteinrichtung einen an der Bedienerseite der Arbeitsmaschine vorstehenden und auf die Maschine hin verschiebbaren, vorzugsweise federbelasteten Taster (14) aufweist und Steuerhebel (9) zum Ingangsetzen bzw. Schalten der Fahrtrichtung des Fahrantriebes vorgesehen ist, dadurch gekennzeichnet, daß die Notabschalteinrichtung dazu ausgebildet ist, im Gefahrenfalle den Fahrantrieb für eine vorübergehende Umkehr der Fahrtrichtung zu schalten, wobei der Taster (14) bei Betätigung zunächst den Steuerhebel (9) für den Fahrbetrieb der Arbeitsmaschine funktional vom Antriebsmotor trennt und bei weiterem Eindrücken die Umkehr des Fahrantriebes schaltet, und daß eine Rückstelleinrichtung (19) vorgesehen ist, welche die Steuereinrichtung (5) in Ruhestellung zurückführt.

2. Steuereinrichtung nach Anspruch 1, dadurch gekennzeichnet, daß der Taster (14) den Steuerhebel (9) für den Fahrantrieb zwangsweise vom Antriebsmotor trennt.

3. Steuereinrichtung nach einem der vorangegangenen Ansprüche, dadurch gekennzeichnet, daß ein von der Bedienerperson zu betätigender Zugbügel (3) zur wirksamen Schaltung der Steuereinrichtung (5) vorgesehen ist mit wenigstens einer mechanisch-flexiblen Fernbetätigung (24, 34) für die Wirkverbindung zwischen Zugbügel (3) und Steuereinrichtung (5).

4. Steuereinrichtung nach einem der vorangegangenen Ansprüche, dadurch gekennzeichnet, daß zur Betätigung der Steuereinrichtung (5) ein zweiarmiger Hebel (35) vorgesehen ist, dessen einer Hebelarm (36) von dem Zugbügel (3) zum Ingangsetzen des Fahrantriebes gebildet ist, an dem die Bedienerperson angreift und schaltet und an dessen anderem Hebelarm (37) die mechanisch-flexible Fernbetätigung (24 bzw. 34) angreift.

5. Steuereinrichtung nach Anspruch 4, dadurch gekennzeichnet, daß bei Einschieben des Tasters (14) der Zugbügel (3) zwangsweise in seine den Fahrantrieb abschaltende Stellung übergeführt wird.

6. Steuereinrichtung nach einem der vorangegangenen Ansprüche, dadurch gekennzeichnet, daß sie zwei Eingänge (8, 20) aufweist, wobei ein Steuerhebel (9) für den Fahrantrieb mittels einer Kupplung (26) mit dem ersten Eingang (8) verbunden ist und der eingedrückte Taster (14) am zweiten Eingang (20) angreift.

7. Steuereinrichtung nach Anspruch 6, dadurch gekennzeichnet, daß die Kupplung (26) als Drehkupplung ausgebildet ist, wobei die Kupplungsteile (38 bzw. 10, 7) stirnseitig formschlüssig ineinandergreifen und axial entriegelbar sind.

8. Steuereinrichtung nach Anspruch 7, dadurch gekennzeichnet, daß der Formschluß durch eine Ausnehmung (11) an der Stirnseite des einen Kupplungsteils (7) und durch einen quer gesetzten Stift (10) am anderen Kupplungsteil (38) gebildet ist.

9. Steuereinrichtung nach einem der vorangegangenen Ansprüche, dadurch gekennzeichnet, daß der eingedrückte Taster (14), dazu ausgebildet ist die Kupplungsteile (38 bzw. 10, 7) mechanisch voneinander zu trennen.

10. Steuereinrichtung nach einem der vorangegangenen Ansprüche, dadurch gekennzeichnet, daß der Taster (14) als Pralltopf ausgebildet ist.

11. Handgeführte Arbeitsmaschine mit einer Steuereinrichtung nach einem der vorangegangen Ansprüche 1 bis 10.

12. Deichsel für eine handgeführte Arbeitsmaschine mit einer Steuereinrichtung nach einem der vorangegangenen Ansprüche 1 bis 10.

## Claims

1. Control equipment for a hand-guided work machine with travel drive, such as for example a vibration roller, with an emergency switching-off device for the stopping of the travel drive of the work machine in the case of danger, wherein the emergency switching-off device comprises a preferably spring-loaded feeler (14), which projects at the operator side of the work machine and is displaceable towards the machine, and a control lever (9) is provided for the setting into motion or the switching of the direction of travel of the travel drive, characterised thereby, that the emergency switching-off device is constructed for switching the travel drive for a temporary reversal of the direction of travel in the case of danger, wherein the feeler (14) on actuation initially separates the control lever (9) for the travel drive of the work machine functionally from the drive motor and on further depression switches the reversal of the travel drive and that a resetting equipment (19) is provided, which guides the control equipment (5) back into the rest setting.

2. Control equipment according to claim 1, characterised thereby, that the feeler (14) separates the control lever (9) for the travel drive constrainedly from the drive motor.

3. Control equipment according to one of the preceding claims, characterised thereby, that a draw bar (3) to be actuated by the operating person is provided for the effective switching of the control equipment (5) with at least one mechanically flexible remote control (24, 34) for the operative connection between the draw bar (3) and the control equipment (5).

4. Control equipment according to one of the preceding claims, characterised thereby, that a two-armed lever (35), the one lever arm (36) of which is formed by the draw bar (3) for the setting into motion of the travel drive and at which lever arm the operating person engages and switches and at the other lever arm (37) of which the mechanically flexible remote control (24 or 34) engages, is provided for the actuation of the control equipment (5).

5. Control equipment according to claim 4, characterised thereby, that the draw bar (3) is constrainedly transferred into its setting switching the travel drive off on the feeler (14) being pushed in.

6. Control equipment according to one of the preceding claims, characterised thereby, that it comprises two inputs (8, 20), wherein a control lever (9) for the travel drive is connected by means of a clutch (26) with the first input (8) and the pushed-in feeler (14) engages at the second input (20).

7. Control equipment according to claim 6, characterised thereby, that the clutch (26) is constructed as rotary clutch, wherein the clutch parts (38 or 10, 7) interengage shape-lockingly at the end face and are unlatchable axially.

8. Control equipment according to claim 7, characterised thereby, that the shape-locking is formed by a recess (11) at the end face of the one clutch part (7) and by a transversely placed pin (10) at the other clutch part (38).

9. Control equipment according to one of the preceding claims, characterised thereby, that the pushed-in feeler (14) is constructed for separating the clutch parts (38 or 10, 7) mechanically one from the other.

10. Control equipment according to one of the preceding claims, characterised thereby, that the feeler (14) is constructed as baffle pot.

11. Hand-guided work machine with a control equipment according to one of the preceding claims 1 to 10.

12. Shaft for a hand-guided work machine with a control equipment according to one of the preceding claims 1 to 10.

## Revendications

1. Dispositif de commande pour un engin conduit manuellement et équipé d'un entraînement de propulsion comme, par exemple un rouleau vibrant, ainsi que d'un dispositif d'arrêt d'urgence pour la mise à l'arrêt de l'entraînement de propulsion de la machine en cas de danger, le dispositif d'arrêt d'urgence comprenant un bouton (14), de préférence chargé par ressort, qui fait saillie sur le côté de service de l'engin et peut être poussé en direction de la machine, et un levier de commande (9) étant prévu pour la mise en marche ou la commande du sens de la marche de l'entraînement de propulsion, caractérisé en ce que le dispositif d'arrêt d'urgence est conformé de manière à commander l'entraînement de propulsion pour une inversion temporaire du sens de marche en cas de danger, le bouton (14), lorsqu'il est actionné, effectuant tout d'abord la désolidarisation fonctionnelle entre le levier de commande (9) du mouvement de propulsion de l'engin et le moteur, puis déclenchant l'inversion de l'entraînement de propulsion lorsqu'on l'enfonce davantage et en ce qu'il est prévu un dispositif de rappel (19) qui ramène le dispositif de commande (5) à la position de repos.

2. Dispositif de commande selon la revendication 1, caractérisé en ce que le bouton (14) désolidarise positivement du moteur d'entraînement le levier de commande (9) de l'entraînement de propulsion.

3. Dispositif de commande selon une des revendications précédentes, caractérisé en ce qu'il est prévu un timon en arceau (3) manoeuvré par le conducteur et destiné à la commutation effective du dispositif de commande (5), avec une commande à distance mécanique et flexible (24, 34) pour la liaison fonctionnelle entre le timon en arceau (3) et le dispositif de commande (5).

4. Dispositif de commande selon une des revendications précédentes, caractérisé en ce que, pour l'actionnement du dispositif de commande (5), il est prévu un levier à deux bras (35) dont un bras (36) est formé par le timon en arceau (3) pour la mise en marche de l'entraînement de propulsion, que l'opérateur saisit et commute, et dont l'autre bras de levier (37) est attaqué par la commande à distance mécanique et flexible (24 ou 34).

5. Dispositif de commande selon la revendication 4, caractérisé en ce que, lorsqu'on enfonce le bouton (14), ie timon en arceau (3) est positivement placé dans sa position qui met l'entraînement de propulsion hors d'action.

6. Dispositif de commande selon une des revendications précédentes, caractérisé en ce qu'il comprend deux entrées (8, 20), un levier de commande (9) pour l'entraînement de propulsion étant relié à la première entrée (8) au moyen d'un accouplement (26) et le bouton (14) enfoncé attaquant la deuxième entrée (20).

7. Dispositif de commande selon la revendication 6, caractérisé en ce que l'accouplement (6) est constitué par un accouplement tournant, les parties (38 ou 10, 7 respectivement) de l'accouplement étant en prise entre elles par sûreté de forme sur leurs faces frontales et pouvant être désolidarisées axialement.

8. Dispositif de commande selon la revendication 7, caractérisé en ce que la liaison par sûreté de forme est formée d'un évidement (11) prévu sur la face frontale de l'une des parties (7) de l'accouplement et par une goupille (10) disposée transversalement, prévue sur l'autre partie (38) de l'accouplement.

9. Dispositif de commande selon une des revendications précédentes, caractérisé en ce que le bouton (14) enfoncé est constitué de façon à désolidariser mécaniquement les parties (38 ou 10, 7 respectivement) de l'accouplement.

10. Dispositif de commande selon une des revendications précédentes, caractérisé en ce que le bouton (14) est constitué par un tampon de butoir.

11. Engin conduit manuellement comprenant un dispositif de commande selon une des revendications précédentes 1 à 10.

12. Timon pour engin conduit manuellement, comprenant un dispositif de commande selon une des revendications précédentes 1 à 10.
